# FASCICULE DE BREVET EUROPEEN

(11) **EP 3 163 165 B1**
(45) Date de publication et mention de la délivrance du brevet: **01.04.2020**
(21) Numéro de dépôt: 16306418.1
(22) Date de dépôt: 28.10.2016
(51) Int. Cl.: F23J 13/02, F23J 11/00, E04F 17/02, F16L 5/04, F23J 13/04

(54) **ELÉMENT DE CONDUIT POUR LES FUMÉES DE COMBUSTION PROVENANT D'UN APPAREIL DE CHAUFFAGE**
LEITUNGSELEMENT FÜR VERBRENNUNGSRAUCH AUS EINEM HEIZGERÄT
DUCT ELEMENT FOR COMBUSTION FUMES FROM A HEATING APPLIANCE

(30) Priorité: 29.10.2015 FR 1560368
(43) Date de publication de la demande: 03.05.2017
(73) Titulaire: Poujoulat, 79360 Granzay Gript (FR)
(72) Inventeur: PIERRE, Jean-Luc, 79460 MAGNE (FR)
(74) Mandataire: Jacobacci Coralis Harle

(56) Documents cités:
- AT-B- 411 929
- DE-A1- 10 125 177
- DE-A1-102007 010 910
- GB-A- 1 032 469

## Description

### DOMAINE TECHNIQUE AUQUEL SE RAPPORTE L' INVENTION

La présente invention concerne le domaine de la fumisterie ; elle concerne plus particulièrement un élément de conduit pour les fumées de combustion provenant d'un appareil de chauffage, ledit élément de conduit étant destiné à être rapporté au travers d'une lumière traversante verticale qui est ménagée au travers d'une paroi horizontale d'une structure de bâtiment (par exemple un plafond ou un plancher).

### ARRIERE-PLAN TECHNOLOGIQUE

Les fumées générées par les appareils de chauffage (par exemple du genre poêle, insert, cuisinière ou chaudière) sont canalisées par un conduit comprenant plusieurs éléments de conduit assemblés entre eux.

A cet effet il existe notamment des éléments de conduit isolés thermiquement, qui ont pour intérêt d'optimiser le rendement de l'appareil de chauffage et de réduire ainsi la consommation d'énergie.

De tels éléments de conduit isolés sont également intéressants pour assurer un fonctionnement de l'appareil de chauffage en toute sécurité : l'isolation protège les matériaux combustibles environnants.

Pour cela, les éléments de conduit isolés comportent habituellement deux tubes métalliques concentriques :
- un tube intérieur, dans lequel sont destinées à cheminer les fumées de combustion, et
- un tube extérieur, rapporté coaxialement autour dudit tube intérieur pour délimiter ensemble un espace annulaire longitudinal contenant des moyens isolants thermiques ignifuges.

Par exemple, le document DE-10 2007 010 910 décrit un tel élément de conduit pour les fumées de combustion.

L'élément de conduit comprend trois parties de conduit qui comportent chacune deux tubes métalliques concentriques : un tube intérieur et un tube extérieur.

Un espace périphérique, délimité entre les deux tubes, est rempli avec un matériau isolant thermique.

En l'espèce, une partie de conduit, traversante, s'étend au travers de la paroi horizontale. Cette partie de conduit traversante comporte les deux tubes concentriques dont le tube extérieur s'étend dans le prolongement du tube extérieur équipant les parties de conduit associées.

Toutefois, en pratique, les normes et règlementations incendies obligent une implantation de ces conduits isolés au sein d'une gaine en béton ou équivalent, notamment lorsqu'ils s'étendent sur plusieurs étages du bâtiment.

La gaine en béton est continue sur toute la hauteur de la structure de bâtiment. Elle permet de restituer le degré coupe-feu du ou des parois horizontales traversées.

Cette contrainte d'implantation vise notamment à prévenir une propagation de la chaleur et de l'incendie entre ces étages de bâtiment, du fait d'un phénomène de conduction thermique le long des tubes extérieurs métalliques du conduit isolé.

Il serait par conséquent très intéressant de disposer d'un conduit isolé qui serait apte à éviter une propagation de la chaleur entre les étages d'une structure de bâtiment, cela sans nécessiter son implantation dans une gaine en béton qui est complexe et onéreuse.

Pour des questions esthétiques et architecturales, il pourrait également être intéressant de pouvoir laisser le conduit de fumées apparent dans la structure de bâtiment, ce que ne permettent pas les conduits de fumées actuels pour les raisons de sécurité précitées.

### OBJET DE L'INVENTION

Afin de remédier aux inconvénients précités de l'état de la technique, la présente invention propose un élément de conduit pour les fumées de combustion provenant d'un appareil de chauffage, ledit élément de conduit étant défini par les caractéristiques de la revendication indépendante 1. Des autres caractéristiques avantageuses sont décrites dans les revendications dépendantes.

L'élément de conduit comprend au moins deux parties de conduit qui comportent chacune deux tubes métalliques concentriques, à savoir :
- un tube intérieur, dans lequel sont destinées à cheminer les fumées de combustion, et
- un tube extérieur, rapporté coaxialement autour dudit tube intérieur pour délimiter ensemble un espace annulaire longitudinal contenant des moyens isolants thermiques ignifuges.

Les parties de conduit comportent chacune une extrémité d'assemblage, pour l'assemblage étanche et coaxial desdites parties de conduit, du côté de laquelle lesdits tubes se terminent par une bordure proximale.

Ledit élément de conduit comprend au moins une partie de conduit comportant un tube intérieur dont au moins une partie forme un tronçon libre, non recouvert par un tube extérieur.

Et ledit élément de conduit assemblé comporte :
- lesdites bordures proximales desdits tubes extérieurs qui sont agencées à distance l'une de l'autre, et
- au moins une partie dudit au moins un tronçon libre de tube intérieur qui est intercalée entre lesdites bordures proximales desdits tubes extérieurs.

Ainsi, en pratique, l'élément de conduit est rapporté au niveau de la lumière verticale, de part et d'autre de la paroi horizontale, de sorte que :
- ledit au moins un tronçon libre de tube intérieur est rapporté au travers de ladite lumière traversante verticale, et
- les bordures proximales des tubes extérieurs s'étendent de part et d'autre, et sur le pourtour, de la lumière traversante verticale.

Les tubes extérieurs de l'élément de conduit sont ainsi destinés à venir de part et d'autre de la paroi horizontale, dont la lumière verticale est destinée à être traversée uniquement par ledit au moins un tronçon libre des tubes intérieurs.

On obtient alors une rupture de pont thermique entre les tubes extérieurs de l'élément de conduit, qui s'étendent à distance l'un de l'autre et qui sont destinés à être séparés par la paroi horizontale.

En cas d'incendie, la chaleur reçue par le tube extérieur d'un étage ne peut ainsi pas diffuser par phénomène de conduction directement jusqu'au tube extérieur d'un autre étage.

La mise en œuvre d'un tel élément de conduit évite ainsi la construction d'une gaine en béton.

Le conduit de fumées peut ainsi être implanté de manière apparente dans la structure de bâtiment (par exemple le conduit de fumée peut être laissé visible sur toute sa hauteur dans une maison d'architecte). Alternativement, le conduit de fumées peut également être protégé par un simple coffrage ou habillage qui est réalisé de plancher à plafond (par exemple du type plaque de plâtre) et qui est sans aucune caractéristique de protection anti-incendie.

L'élément de conduit a ainsi pour intérêt d'assurer un fonctionnement de l'appareil de chauffage optimal et en toute sécurité, en limitant les risques de transfert de feu entre les étages en cas d'incendie.

Selon un mode de réalisation préféré, le tube intérieur de l'une au moins desdites parties de conduit comporte, du côté de ladite extrémité d'assemblage, le tronçon libre qui s'étend en saillie par rapport audit tube extérieur associé.

De préférence, le tube intérieur des deux parties de conduit comporte, du côté de leurs extrémités d'assemblage respectives, ledit tronçon libre.

Encore selon le mode de réalisation préféré, du côté de leurs extrémités d'assemblage respectives, le diamètre d'une surface intérieure du tube intérieur d'une première partie de conduit correspond, au jeu près, au diamètre d'une surface extérieure du tube intérieur d'une seconde partie de conduit, pour permettre l'emmanchement des extrémités d'assemblage associées.

Selon encore une caractéristique de réalisation avantageuse, l'extrémité d'assemblage de l'une au moins desdites parties de conduit comporte des moyens d'étanchéité comprenant un matériau compressible ; les moyens d'étanchéité sont agencés pour être compressés sur ladite paroi horizontale de manière à assurer une étanchéité aux fumées de ladite lumière traversante.

La bordure proximale du tube extérieur de l'une au moins des parties de conduit s'étend dans un plan perpendiculaire à un axe longitudinal ; et les moyens d'étanchéité sont ménagés au niveau de ladite bordure proximale et en saillie par rapport audit plan.

De préférence, l'espace annulaire de l'une au moins des parties de conduit comporte une ouverture proximale, délimitée par la bordure proximale du tube extérieur ; et les moyens d'étanchéité s'étendent au niveau, et de part et d'autre, de ladite ouverture proximale.

Toujours selon cette caractéristique de réalisation avantageuse, les moyens d'étanchéité sont avantageusement formés par les moyens isolants thermiques ignifuges.

Encore selon cette caractéristique de réalisation avantageuse, les extrémités d'assemblage des deux parties de conduit comportent chacune lesdits moyens d'étanchéité.

Selon une autre caractéristique de réalisation, la bordure proximale du tube extérieur de l'une au moins des parties de conduit comporte des moyens de solidarisation avec la paroi horizontale.

Dans ce cas, les moyens de solidarisation comprennent avantageusement une collerette raccordée à la bordure proximale du tube extérieur, munie d'une pluralité d'orifices répartis sur son pourtour pour la réception d'organes de fixation.

L'invention propose également une installation de chauffage, comprenant :
- un appareil de chauffage produisant des fumées de combustion, et
- un conduit de fumées équipé d'au moins un élément de conduit selon l'invention.

L'invention propose encore une structure de bâtiment comprenant une paroi horizontale traversée par une lumière verticale, laquelle structure de bâtiment est équipée d'une installation de chauffage selon l'invention, dont l'élément de conduit est rapporté au niveau de ladite lumière verticale, de part et d'autre de la paroi horizontale, de sorte que :
- ledit au moins un tronçon libre de tube intérieur est rapporté au travers de la lumière traversante verticale, et
- les bordures proximales des tubes extérieurs s'étendent de part et d'autre, et sur le pourtour, de la lumière traversante verticale,
et que le diamètre de ladite lumière traversante est compris entre le diamètre dudit au moins un tronçon libre de tube intérieur et le diamètre desdits tubes extérieurs.

Le cas échéant, les moyens d'étanchéité sont dans un état compressé contre ladite paroi horizontale.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue générale et en perspective d'un élément de conduit selon l'invention, dont les deux parties de conduit sont dissociées l'une de l'autre ;
- la figure 2 est une vue en coupe longitudinale de l'élément de conduit selon la figure 1, dont les parties de conduit sont encore dissociées ;
- la figure 3 est une vue en coupe longitudinale et en perspective de l'élément de conduit selon la figure 1, dont les parties de conduit sont assemblées l'une avec l'autre et avec une paroi horizontale d'une structure de bâtiment ;
- la figure 4 est une vue partielle et agrandie du détail IV de la figure 3, montrant la coopération de l'élément de conduit avec la lumière traversante verticale de la paroi horizontale de la structure de bâtiment.

### Elément de conduit

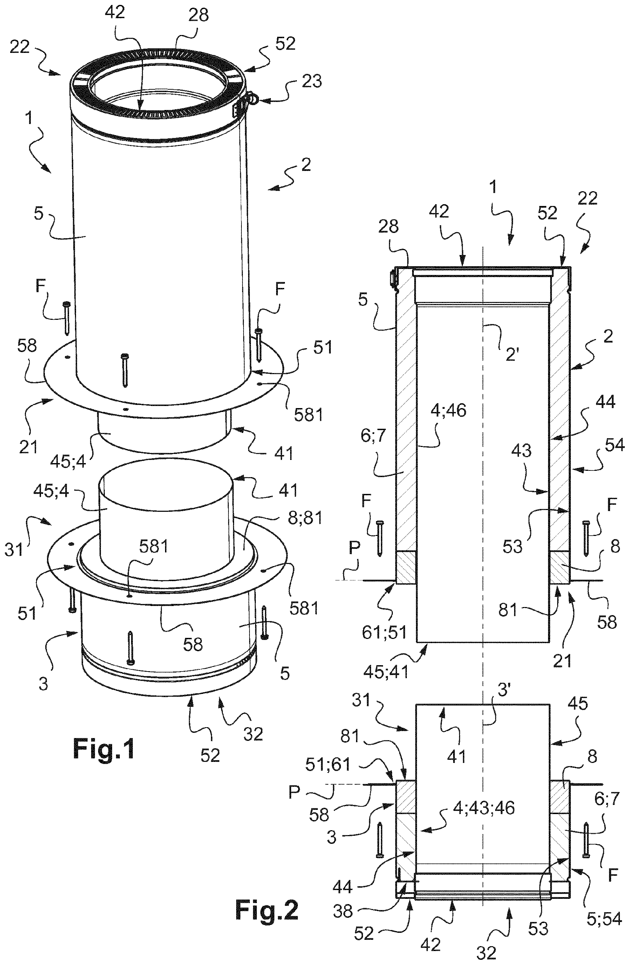

Sur les figures 1 et 2, on a représenté un élément de conduit 1 pour la canalisation des fumées de combustion provenant d'un appareil de chauffage (non représenté).

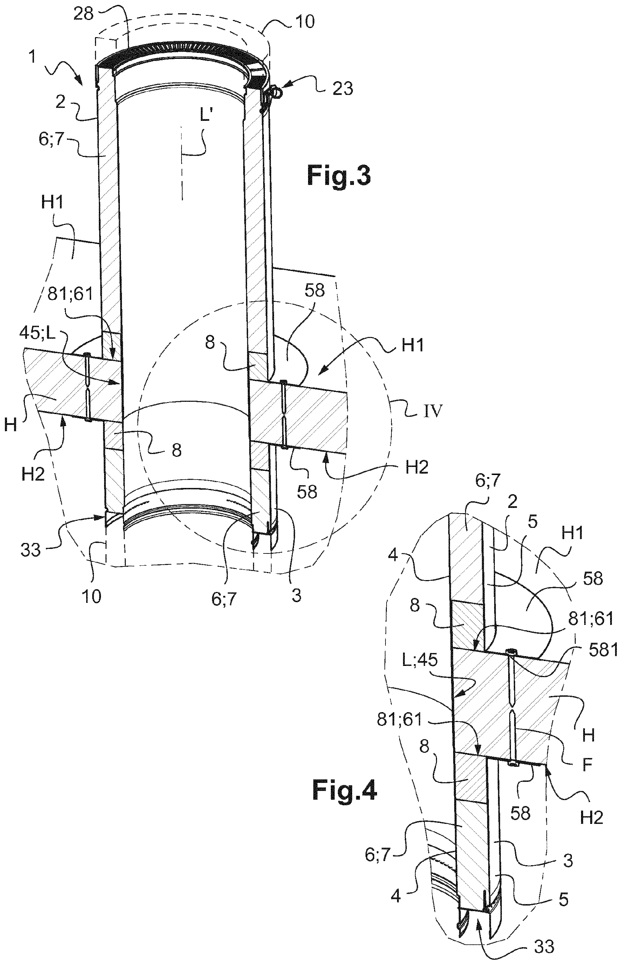

Comme développé ci-après en relation avec les figures 3 et 4, l'élément de conduit 1 est adapté à être rapporté au niveau d'une lumière traversante verticale L qui est ménagée au travers d'une paroi horizontale H (par exemple un plancher ou un plafond) appartenant à une structure de bâtiment (non représentée).

Une telle paroi horizontale H est généralement destinée à séparer deux étages de la structure de bâtiment.

L'élément de conduit 1 comprend ici deux parties de conduit 2, 3, présentant chacune un axe longitudinal 2', 3', à savoir :
- une partie de conduit 2, supérieure, destinée à venir de manière sus-jacente à la paroi horizontale H, et
- une partie de conduit 3, inférieure, destinée à venir de manière sous-jacente à la paroi horizontale H.

La longueur de la partie de conduit 2 supérieure est avantageusement supérieure à la longueur de la partie de conduit 3 inférieure.

Par exemple, la longueur de la partie de conduit 2 supérieure est comprise entre 50 et 70 cm ; la longueur de la partie de conduit 3 inférieure est comprise entre 10 et 30 cm.

Une telle caractéristique dimensionnelle a notamment pour avantage de faciliter l'intégration de l'élément de conduit 1 ; la partie de conduit 3 inférieure peut notamment être connectée à l'appareil de chauffage.

Chaque partie de conduit 2, 3 comporte, respectivement, deux extrémités 21, 22 ; 31, 32 opposées.

Une première extrémité 21, 31 des parties de conduit 2, 3 est ici appelée « extrémité d'assemblage », en ce qu'elle intervient dans l'assemblage étanche et coaxial desdites parties de conduit 2, 3 entre elles (comme décrit ci-après en relation avec les figures 3 et 4).

Une seconde extrémité 22, 32 des parties de conduit 2, 3 intervient quant à elle dans l'assemblage étanche et coaxial de l'élément de conduit 1 avec d'autres éléments de conduit 10 sus-jacents et sous-jacents (représentés très schématiquement sur la figure 3).

En l'espèce :
- la seconde extrémité 22, supérieure, de la partie de conduit 2 supérieure comporte un dispositif du type collier de verrouillage 23, et
- la seconde extrémité 32, inférieure, de la partie de conduit 3 inférieure comporte une gorge annulaire 33 apte à recevoir la bordure supérieure d'un élément de conduit complémentaire.

Chaque partie de conduit 2, 3 se compose ici de deux tubes métalliques 4, 5 concentriques, à savoir :
- un tube intérieur 4, dans lequel sont destinées à cheminer les fumées de combustion, et
- un tube extérieur 5, rapporté coaxialement autour dudit tube intérieur 4.

Ces tubes métalliques sont par exemple réalisés en acier inoxydables.

Le diamètre du tube intérieur 4 est inférieur au diamètre du tube extérieur 5, pour délimiter ensemble un espace annulaire longitudinal 6.

Par exemple, les tubes intérieurs 4 ont un diamètre compris entre 80 et 300 mm ; les tubes extérieurs 5 ont un diamètre compris entre 130 et 500 mm ; l'espace annulaire longitudinal 6 a une largeur comprise entre 25 et 100 mm.

Les tubes 4, 5 de chaque partie de conduit 2, 3 peuvent être maintenus à distance par le biais d'organes formant entretoise (non représentés).

L'espace annulaire longitudinal 6 contient des moyens isolants thermiques ignifuges 7.

Les moyens isolants thermiques ignifuges 7 comprennent par exemple un matériau réalisé en laine de roche, par exemple une laine de roche en vrac.

Les tubes 4, 5 de chaque partie de conduit 2, 3 sont chacun délimités par deux bordures opposées :
- une bordure proximale 41, 51, respectivement, située du côté de la première extrémité 21, 31 de la partie de conduit 2, 3, et
- une bordure distale 42, 52, respectivement, située du côté de la seconde extrémité 22, 32 de la partie de conduit 2, 3.

Au niveau de la seconde extrémité 22, 32, les bordures distales 42, 52 de chaque partie de conduit 2, 3 sont reliées entre elles par une couronne ajourée 28, 38, respectivement, pour le maintien des moyens isolants thermiques ignifuges 7 dans l'espace annulaire longitudinal 6.

Les tubes 4, 5 de chaque partie de conduit 2, 3 sont encore chacun délimités par deux surfaces cylindriques opposées : une surface intérieure 43, 53 et une surface extérieure 44, 54.

Le tube intérieur 4 de chacune des deux parties de conduit 2, 3 comporte, du côté de leurs extrémités d'assemblage 21, 31 respectives, un tronçon libre 45 qui s'étend en saillie par rapport au tube extérieur 5 associé et qui est non recouvert par ce dernier.

En d'autres termes, le tube intérieur 4 de chacune des deux parties de conduit 2, 3 comporte deux tronçons :
- le tronçon libre 45, terminal, dont la surface extérieure 44 est libre et non recouverte par le tube extérieur 5, et
- un tronçon « enveloppé » 46, dont la surface extérieure 44 est recouverte par le tube extérieur 5 associé et par conséquent recouverte par les moyens isolants thermiques ignifuges 7.

Le tronçon libre 45 forme ainsi la bordure proximale 41 du tube intérieur 4, qui est décalé longitudinalement par rapport à la bordure proximale 51 du tube extérieur 5 associé.

Les tronçons libres 45 sont destinés à coopérer l'un avec l'autre par un emmanchement coaxial, lors de l'assemblage des deux parties de conduit 2, 3.

Un tel emmanchement coaxial autorise une tolérance en coulissement entre les deux parties de conduit 2, 3, pour s'adapter à l'épaisseur de la paroi horizontale H et à la hauteur de la lumière verticale traversante L.

Pour obtenir cet emmanchement, le diamètre de la surface intérieure 43 du tronçon libre 45 de la partie de conduit 3 inférieure correspond, au jeu près, au diamètre de la surface extérieure 44 du tronçon libre 45 de la partie de conduit 2 supérieure.

A cet effet, le tube intérieur 4 de la partie de conduit 3 inférieure comporte avantageusement une section constante sur sa longueur ; et le tube intérieur 4 de la partie de conduit 2 supérieure comporte un tronçon libre 45 formant un rétreint par rapport à son tronçon « enveloppé » 46.

Par exemple, ce diamètre de la surface intérieure 43 du tronçon libre 45 de la partie de conduit 3 inférieure et le diamètre de la surface extérieure 44 du tronçon libre 45 de la partie de conduit 2 supérieure ont une valeur comprise entre 80 et 300 mm.

Encore à titre indicatif, les tronçons libres 45 ont avantageusement une longueur comprise entre 200 et 400 mm.

Cette longueur correspond avantageusement à l'épaisseur de la lumière verticale traversante L.

Par ailleurs, la bordure proximale 51 du tube extérieur 5 de chaque partie de conduit 2, 3 est quant à elle raccordée à une collerette 58 s'étendant dans un plan agencé perpendiculairement à l'axe longitudinal 2', 3' des parties de conduit 2, 3 respectives, formant ainsi un plan d'appui P.

Cette collerette 58 est munie d'une pluralité d'orifices traversants 581 répartis sur son pourtour pour la réception d'organes de fixation F.

Cette collerette 58 forme ainsi également des moyens pour la solidarisation de la partie de conduit 2, 3 sur la paroi horizontale H.

Encore, l'extrémité d'assemblage 21, 31 des deux parties de conduit 2, 3 comporte des moyens d'étanchéité 8 qui sont destinés à assurer une étanchéité aux fumées de la lumière traversante L associée.

Ces moyens d'étanchéité 8 sont réalisés en un matériau compressible, avantageusement un matériau isolant thermique ignifuge, par exemple en laine de roche.

Pour une efficacité optimale, ces moyens d'étanchéité 8 sont agencés pour être compressés sur la paroi horizontale H lors du montage de l'élément de conduit 1.

A cet effet, les moyens d'étanchéité 8 de chaque partie de conduit 2, 3 sont ménagés au niveau de la bordure proximale 51 de leur tube extérieur 5, et en saillie par rapport au plan d'appui P précité.

En l'espèce, l'espace annulaire 6 des deux parties de conduit 2, 3 comporte une ouverture proximale 61, s'ouvrant du côté de l'extrémité d'assemblage 21, 31 et délimitée par la bordure proximale 51 du tube extérieur 5.

Les moyens d'étanchéité 8 consistent en une couronne de matériau isolant thermique ignifuge, ici une pièce de laine de roche en coquille préfabriquée.

Ces moyens d'étanchéité 8 s'étendent au niveau de ladite ouverture proximale 61, et de part et d'autre de cette dernière.

En l'espèce, ces moyens d'étanchéité 8 comportent une surface proximale 81 qui est en forme générale d'une bande annulaire, délimités entre les tubes intérieur 4 et extérieur 5 associés.

Cette surface proximale 81 s'étend dans un plan qui est décalé longitudinalement par rapport au plan d'appui P et par rapport à la bordure proximale 51 du tube extérieur 5, du côté de la bordure proximale 41 du tube intérieur 4.

En pratique, les moyens d'étanchéité 8 débordent avantageusement d'une épaisseur d'au maximum 1 cm, par exemple de l'ordre de 5 mm, par rapport à la bordure proximale 51 du tube extérieur 5.

Selon une variante de réalisation non représentée, seul l'un des tubes intérieurs 4 pourrait être pourvu d'un tronçon libre 45.

Ce tronçon libre 45 comporte alors une longueur suffisante pour s'étendre sur la hauteur de la lumière traversante verticale L et pour s'emboîter dans le tube intérieur 4 de l'autre partie de conduit 2, 3.

### Installation de chauffage et structure de bâtiment équipée

L'élément de conduit 1 selon l'invention est destiné à être associé à d'autres éléments de conduit 10 (représentés très schématiquement sur la figure 3).

Ces éléments de conduit 1 assemblés forment ensemble un conduit de fumées qui s'étend entre :
- un appareil de chauffage (non représenté) produisant des fumées de combustion, et
- une sortie de toit (non représenté).

Une telle installation de chauffage est destinée à équiper une structure de bâtiment dont seule une paroi horizontale H est représentée sur les figures 3 et 4.

De manière générale, la structure de bâtiment peut comporter une ou plusieurs parois horizontales H, formant chacune un plancher ou un plafond.

La paroi horizontale H comporte deux surfaces : une surface supérieure H1 et une surface inférieure H2.

Cette paroi horizontale H est traversée par la lumière verticale traversante L qui débouche au niveau desdites surfaces H1, H2 et qui est orientée selon un axe vertical L'.

Comme illustré sur les figures 3 et 4, le diamètre de cette lumière traversante verticale L est compris entre :
- un diamètre minimal correspondant au diamètre des tronçons libres 45 des tubes intérieurs 4, et en particulier le diamètre de la surface extérieure 44 du tronçon libre 45 de la partie de conduit 3 inférieure, et
- un diamètre maximal correspondant au diamètre des tubes extérieurs 5 constitutifs des parties de conduit 2, 3.

Par exemple, le diamètre de cette lumière traversante verticale L est compris entre 80 et 350 mm.

Le montage de l'élément de conduit 1 comprend avantageusement les étapes suivantes :
- la pose et la fixation de la partie de conduit 3 inférieure, de sorte que son tronçon libre 45 s'étend au sein de la lumière traversante L, puis
- la pose et la fixation de la partie de conduit 2 supérieure de sorte que son tronçon libre 45 est rapporté par emmanchement dans le tronçon libre 45 de la partie de conduit 3 inférieure et au sein de la lumière traversante verticale L.

La pose de ces parties de conduit 2, 3 s'effectue par la mise en appui de leur collerette 58 sur le pourtour de la lumière traversante verticale L.

Ce contact circulaire s'effectue, respectivement, du côté de la surface supérieure H1 et de la surface inférieure H2 de la paroi horizontale H.

Et la fixation des parties de conduit 2, 3 est obtenue par l'implantation des organes de fixation F au travers des orifices traversants 581 des collerettes 58 et au sein de la paroi horizontale H (figure 4).

Lors de ce montage, la surface proximale 81 des moyens d'étanchéité 8 vient en appui sur le pourtour de la lumière traversante verticale L (respectivement du côté de la surface supérieure H1 et de la surface inférieure H2 de la paroi horizontale H) provoquant alors son déplacement et la mise en compression des moyens d'étanchéité 8.

La surface supérieure H1 et la surface inférieure H2 de la paroi horizontale H viennent ainsi obturer, au moins partiellement, les ouvertures proximales 61 des espaces annulaires longitudinaux 6.

Lors de la pose et de la fixation de la partie de conduit 3 inférieure, il est possible qu'il existe un espace annulaire périphérique entre son tronçon libre 45 et la lumière traversante verticale L associée.

Le poseur peut alors combler cet espace annulaire périphérique avec des moyens isolants thermiques ignifuges, par exemple avec de la laine de roche ou avec un joint haute température, qui sont choisis notamment en fonction de l'épaisseur dudit espace.

En pratique, il peut être utile de rapporter une coquille de laine de roche de 5 à 10 cm d'épaisseur dans cet espace annulaire périphérique lorsque des matériaux combustibles, tels que par exemple une poutre en bois, est proche de la lumière verticale traversante L.

L'épaisseur de cette coquille sera établie en fonction de la distance de sécurité à respecter.

Au final, tel que représenté sur les figures 3 et 4, l'élément de conduit 1 est agencé de sorte que :
- les bordures proximales 51 des tubes extérieurs 5 sont agencées à distance l'une de l'autre, de part et d'autre et sur le pourtour de la lumière traversante verticale L, et
- les tronçons libres 45 des tubes intérieurs 5 sont intercalés dans l'espace longitudinal séparant les bordures proximales 51 des tubes extérieurs 5, et sont rapportés au travers de la lumière traversante verticale L.

Les tubes extérieurs 5 de l'élément de conduit 1 s'étendent ainsi à distance l'un de l'autre et sont séparés l'un de l'autre par la paroi horizontale H.

On obtient ainsi un phénomène de rupture de pont thermique, limitant sensiblement la vitesse de propagation de la chaleur le long du conduit de fumées.

Ainsi, en cas d'incendie, le tube extérieur 5 chauffé de l'une des deux parties de conduit 2, 3 est susceptible de monter en température.

La rupture de pont thermique entre les tubes extérieurs 5 de l'élément de conduit 1 (s'étendant à distance l'un de l'autre et séparés par la paroi horizontale H) empêche tout phénomène de conduction thermique directe entre eux.

L'apport thermique est susceptible de diffuser uniquement de manière indirecte, c'est-à-dire via les tubes intérieurs 4.

Or en pratique, cette propagation thermique est fortement ralentie, notamment par les moyens isolants thermiques ignifuges 7 en présence.

De plus, les moyens d'étanchéité 8 vont ici permettre de limiter la diffusion des fumées d'incendie et de la chaleur au travers la lumière traversante verticale L.

Par ailleurs, le conduit de fumées peut être implanté de manière apparente dans la structure de bâtiment (par exemple le conduit de fumée peut être laissé visible sur toute sa hauteur dans une maison d'architecte).

De manière alternative, le conduit de fumées peut également être protégé par un simple coffrage (ou habillage) réalisé de plancher à plafond, par exemple à partir de plaques de plâtre ; un tel coffrage ne nécessite avantageusement pas de caractéristiques de protection anti-incendie.

## Revendications

1. Elément de conduit pour les fumées de combustion provenant d'un appareil de chauffage, ledit élément de conduit (1) étant destiné à être rapporté au travers d'une lumière traversante verticale (L) qui est ménagée au travers d'une paroi horizontale (H) d'une structure de bâtiment,
lequel élément de conduit (1) comprend au moins deux parties de conduit (2, 3) qui comportent chacune deux tubes (4, 5) métalliques concentriques, à savoir :
- un tube intérieur (4), dans lequel sont destinées à cheminer les fumées de combustion, et
- un tube extérieur (5), rapporté coaxialement autour dudit tube intérieur (4) pour délimiter ensemble un espace annulaire longitudinal (6) contenant des moyens isolants thermiques ignifuges (7),
lesquelles parties de conduit (2, 3) comportent chacune une extrémité d'assemblage (21, 31), pour l'assemblage étanche et coaxial desdites parties de conduits (2, 3), du côté de laquelle lesdits tubes (4, 5) se terminent par une bordure proximale (41, 51),
lequel élément de conduit (1) comprend au moins une partie de conduit (2, 3) comportant un tube intérieur (4) dont au moins une partie forme un tronçon libre (45), non recouvert par un tube extérieur (5),
ledit élément de conduit (1) assemblé comporte :
- lesdites bordures proximales (51) desdits tubes extérieurs (5) qui sont agencées à distance l'une de l'autre, destinées à s'étendre de part et d'autre, et sur le pourtour, de la lumière traversante verticale (L), et
- au moins une partie dudit au moins un tronçon libre (45) de tube intérieur (4) qui est intercalée entre lesdites bordures proximales (51) desdits tubes extérieurs (5), destinée à être rapportée au travers de la lumière traversante verticale (L),
laquelle bordure proximale (51) du tube extérieur (5) de l'une au moins des parties de conduit (2, 3) s'étend dans un plan (P) perpendiculaire à un axe longitudinal (2', 3'),
**caractérisé en ce que** l'extrémité d'assemblage (21, 31) de l'une au moins desdites parties de conduit (2, 3) comporte des moyens d'étanchéité (8) comprenant un matériau compressible,
lesquels moyens d'étanchéité (8) sont ménagés au niveau de ladite bordure proximale (51) et en saillie par rapport audit plan (P),
et **en ce que** lesdits moyens d'étanchéité (8) sont agencés pour être compressés sur ladite paroi horizontale (H) de manière à assurer une étanchéité aux fumées de ladite lumière traversante (L).

2. Elément de conduit, selon la revendication 1, **caractérisé en ce que** l'espace annulaire (6) de l'une au moins des parties de conduit (2, 3) comporte une ouverture proximale (61), délimitée par la bordure proximale (51) du tube extérieur (5),
et **en ce que** les moyens d'étanchéité (8) s'étendent au niveau, et de part et d'autre, de ladite ouverture proximale (61).

3. Elément de conduit, selon l'une quelconque des revendications 1 ou 2, **caractérisé en ce que** les moyens d'étanchéité (8) sont formés par des moyens isolants thermiques ignifuges.

4. Elément de conduit, selon l'une quelconque des revendications 1 à 3, **caractérisé en ce que** les extrémités d'assemblage (21, 31) des deux parties de conduit (2, 3) comportent chacune lesdits moyens d'étanchéité (8).

5. Elément de conduit, selon l'une quelconque des revendications 1 à 4, **caractérisé en ce que** les moyens d'étanchéité (8) comportent une surface proximale (81) qui est en forme générale d'une bande annulaire, délimités entre les tubes intérieur (4) et extérieur (5) associés.

6. Elément de conduit, selon l'une quelconque des revendications 1 à 5, **caractérisé en ce que** le tube intérieur (4) de l'une au moins desdites parties de conduit (2, 3) comporte, du côté de ladite extrémité d'assemblage (21, 31), le tronçon libre (45) qui s'étend en saillie par rapport audit tube extérieur (5) associé.

7. Elément de conduit, selon la revendication 6, **caractérisé en ce que** le tube intérieur (4) des deux parties de conduit (2, 3) comporte, du côté de leurs extrémités d'assemblage (21, 31) respectives, ledit tronçon libre (45).

8. Elément de conduit, selon l'une quelconque des revendications 6 ou 7, **caractérisé en ce que**, du côté de leurs extrémités d'assemblage (21, 31) respectives, le diamètre d'une surface intérieure (43) du tube intérieur (4) d'une première partie de conduit (3) correspond, au jeu près, au diamètre d'une surface extérieure (44) du tube intérieur (4) d'une seconde partie de conduit (2), pour permettre l'emmanchement des extrémités d'assemblage (21, 31) associées.

9. Elément de conduit, selon l'une quelconque des revendications 1 à 8, **caractérisé en ce que** la bordure proximale (51) du tube extérieur (5) de l'une au moins des parties de conduit (2, 3) comporte des moyens de solidarisation (58) avec la paroi horizontale (H).

10. Elément de conduit, selon la revendication 9, **caractérisé en ce que** les moyens de solidarisation (58) comprennent une collerette (58) raccordée à la bordure proximale (51) du tube extérieur (5), munie d'une pluralité d'orifices (581) répartis sur son pourtour pour la réception d'organes de fixation (F).

11. Installation de chauffage, comprenant :
- un appareil de chauffage produisant des fumées de combustion, et
- un conduit de fumées équipé d'au moins un élément de conduit (1) selon l'une quelconque des revendications 1 à 10.

12. Structure de bâtiment comprenant une paroi horizontale (H) traversée par une lumière traversante verticale (L), **caractérisée en ce que** ladite structure de bâtiment est équipée d'une installation de chauffage selon la revendication 11, dont l'élément de conduit (1) selon les revendications 1 à 10 est rapporté au niveau de ladite lumière traversante verticale (L), de part et d'autre de la paroi horizontale (H), de sorte que :
- ledit au moins un tronçon libre (45) de tube intérieur (4) est rapporté au travers de la lumière traversante verticale (L), et
- les bordures proximales (51) des tubes extérieurs (5) s'étendent de part et d'autre, et sur le pourtour, de la lumière traversante verticale (L),
et **en ce que** le diamètre de ladite lumière traversante verticale (L) est compris entre le diamètre dudit au moins un tronçon libre (45) de tube intérieur (4) et le diamètre desdits tubes extérieurs (5),
lesquels moyens d'étanchéité (8) sont dans un état compressé contre ladite paroi horizontale (H).

13. Structure de bâtiment selon la revendication 12, en combinaison avec la revendication 5, **caractérisée en ce que** la surface proximale (81) des moyens d'étanchéité (8) vient en appui sur le pourtour de la lumière traversante verticale (L), respectivement du côté d'une surface supérieure (H1) et d'une surface inférieure (H2) de la paroi horizontale (H), provoquant alors son déplacement et la mise en compression des moyens d'étanchéité (8).

## Patentansprüche

1. Leitungselement für Verbrennungsrauch aus einem Heizgerät, wobei das Leitungselement (1) dazu bestimmt ist, durch eine senkrechte Durchgangsöffnung (L), die durch eine horizontale Wand (H) einer Gebäudestruktur hindurch geschaffen ist, geführt zu werden,
wobei das Leitungselement (1) wenigstens zwei Leitungsteile (2, 3) aufweist, die jeweils zwei konzentrische metallene Rohre (4, 5) aufweisen, und zwar
- ein inneres Rohr (4), in dem der Verbrennungsrauch geführt werden soll, und
- ein äußeres Rohr (5), das koaxial um das innere Rohr (4) gelegt ist, um gemeinsam einen länglichen ringförmigen Raum (6) zu begrenzen, der feuerfeste wärmeisolierende Mittel (7) enthält,
wobei die Leitungsteile (2, 3) jeweils ein Verbinduhgsende (21, 31) zum dichten und koaxialen Zusammenfügen der Leitungsteile (2, 3) aufweisen, an dem die Rohre (4, 5) durch einen proximalen Rand (41, 51) enden,
wobei das Leitungselement (1) wenigstens ein Leitungsteil (2, 3) aufweist, das ein inneres Rohr (4) aufweist, von dem wenigstens ein Teil einen freien, nicht durch ein äußeres Rohr (5) bedeckten Abschnitt (45) bildet,
wobei das zusammengefügte Leitungselement (1)
- die proximalen Ränder (51) der äußeren Rohre (5), die voneinander beabstandet angeordnet sind und dazu bestimmt sind, sich beiderseits und am Umfang der senkrechten Durchgangsöffnung (L) zu erstrecken, und
- wenigstens einen Teil des wenigstens einen freien Abschnitts (45) des inneren Rohrs (4), der zwischen den proximalen Rändern (51) der äußeren Rohre liegt und dazu bestimmt ist, durch die senkrechte Durchgangsöffnung (L) gebracht zu werden,
aufweist,
wobei sich der proximale Rand (51) des äußeren Rohrs (5) wenigstens eines der Leitungsteile (2, 3) in einer zu einer Längsachse (2', 3') senkrechten Ebene (P) erstreckt,
**dadurch gekennzeichnet, daß** das Verbindungsende (21, 31) wenigstens eines der Leitungsteile (2, 3) ein komprimierbares Material aufweisende Dichtmittel (8) aufweist,
wobei die Dichtmittel (8) im Bereich des proximalen Endes (51) und aus der Ebene (P) hervorstehend angeordnet sind,
und daß die Dichtmittel (8) dazu ausgebildet sind, auf die horizontale Wand (H) aufgedrückt zu werden, um eine Rauchdichtigkeit des Durchgangslochs (L) sicherzustellen.

2. Leitungselement gemäß Anspruch 1, **dadurch gekennzeichnet, daß** der ringförmige Raum (6) wenigstens eines der Leitungsteile (2, 3) eine durch den proximalen Rand (51) des äußeren Rohrs (5) begrenzte proximale Öffnung (61) aufweist und daß sich die Dichtmittel (8) im Bereich und beiderseits der proximalen Öffnung (61) erstrecken.

3. Leitungselement gemäß einem der Ansprüche 1 oder 2, **dadurch gekennzeichnet, daß** die Dichtmittel (8) durch feuerfeste wärmeisolierende Mittel gebildet sind.

4. Leitungselement gemäß einem der Ansprüche 1 bis 3, **dadurch gekennzeichnet, daß** die Verbindungsenden (21, 31) der beiden Leitungsteile (2, 3) jeweils die Dichtmittel (8) aufweisen.

5. Leitungselement gemäß einem der Ansprüche 1 bis 4, **dadurch gekennzeichnet, daß** die Dichtmittel (8) eine proximale Oberfläche (81) aufweisen, die die Form eines ringförmigen Bands aufweist, und zwischen dem inneren (4) und dem zugehörigen äußeren Rohr (5) begrenzt sind.

6. Leitungselement gemäß einem der Ansprüche 1 bis 5, **dadurch gekennzeichnet, daß** das innere Rohr (4) wenigstens eines der Leitungsteile (2, 3) auf der Seite des Verbindungsendes (21, 31) den freien Abschnitt (45) aufweist, der sich gegenüber dem zugehörigen äußeren Rohr (5) hervorstehend erstreckt.

7. Leitungselement gemäß Anspruch 6, **dadurch gekennzeichnet, daß** das innere Rohr (4) der beiden Leitungsteile (2, 3) auf der Seite ihrer jeweiligen Verbindungsenden (21, 31) den freien Abschnitt (45) aufweist.

8. Leitungselement gemäß einem der Ansprüche 6 oder 7, **dadurch gekennzeichnet, daß** auf der Seite ihrer jeweiligen Verbindungsenden (21, 31) der Durchmesser einer inneren Oberfläche (43) des inneren Rohrs (4) eines ersten Leitungsteils (3) bis auf das Spiel dem Durchmesser einer äußeren Oberfläche (44) des inneren Rohrs (4) eines zweiten Leitungsteils (2) entspricht, um ein Ineinanderstecken der zusammengehörigen Verbindungsenden (21, 31) zu ermöglichen.

9. Leitungselement gemäß einem der Ansprüche 1 bis 8, **dadurch gekennzeichnet, daß** der proximale Rand (51) des äußeren Rohrs (5) wenigstens eines der Leitungsteile (2, 3) Mittel (58) zur Befestigung an der horizontalen Wand (H) aufweist.

10. Leitungselement gemäß Anspruch 9, **dadurch gekennzeichnet, daß** die Befestigungsmittel (58) einen mit dem proximalen Rand (51) des äußeren Rohrs (5) verbundenen Kragen (58) aufweisen, der mit einer Anzahl von über seinen Umfang verteilten Löchern (581) zur Aufnahme von Befestigungselementen (F) versehen ist.

11. Heizungsanlage mit
- einem Verbrennungsrauch erzeugenden Heizgerät und
- einer Rauchleitung, die mit wenigstens einem Leitungselement (1) gemäß einem der Ansprüche 1 bis 10 ausgestattet ist.

12. Gebäudestruktur mit einer von einer senkrechten Durchgangsöffnung (L) durchdrungenen horizontalen Wand (H), **dadurch gekennzeichnet, daß** die Gebäudestruktur mit einer Heizungsanlage gemäß Anspruch 11 ausgestattet ist, deren Leitungselement (1) gemäß einem der Ansprüche 1 bis 10 im Bereich der senkrechten Durchgangsöffnung (L) beiderseits der horizontalen Wand (H) eingesetzt ist, so daß
- der wenigstens eine freie Abschnitt (45) des inneren Rohrs (4) durch die senkrechte Durchgangsöffnung (L) geführt ist und
- sich die proximalen Ränder (51) der äußeren Rohre (5) beiderseits und auf dem Umfang der senkrechten Durchgangsöffnung (L) erstrecken,
und dadurch, daß der Durchmesser der senkrechten Durchgangsöffnung (L) zwischen dem Durchmesser des wenigstens einen freien Abschnitts (45) des inneren Rohrs (4) und dem Durchmesser der äußeren Rohre (5) liegt,
wobei die Dichtmittel (8) gegen die horizontale Wand (H) gepreßt sind.

13. Gebäudestruktur gemäß Anspruch 12 zusammen mit Anspruch 5, **dadurch gekennzeichnet, daß** die proximale Oberfläche (81) der Dichtmittel (8) auf dem Umfang der senkrechten Durchgangsöffnung (L) auf der Seite einer oberen Oberfläche (H1) und einer unteren Oberfläche (H2) der horizontalen Wand (H) angedrückt ist und so deren Verlagerung und das Komprimieren der Dichtmittel (8) bewirkt.

## Claims

1. A duct element for combustion fumes from a heating appliance, said duct element (1) being intended to be brought through a vertical through-aperture (L) that is formed through a horizontal wall (H) of a building structure,
the duct element (1) comprising at least two duct parts (2, 3) that each include two concentric metal tubes (4, 5), i.e.:
- an inner tube (4), in which the combustion fumes are intended to travel, and
- an outer tube (5), brought coaxially around said inner tube (4), for them to delimit together a longitudinal annular space (6) containing a fire-retardant heat insulation means (7),
the duct parts (2, 3) each including an assembly end (21, 31), for the tight and coaxial assembly of said duct parts (2, 3), on the side of which said tubes (4, 5) are ended by an proximal edge (41, 51),
the duct element (1) comprising at least one duct part (2, 3) including an inner tube (4), at least one portion of which forms a free section (45), not covered by an outer tube (5),
said assembled duct element (1) including:
- said proximal edges (51) of said outer tubes (5) that are arranged remote from each other, intended to extend on either side, and over the perimeter, of the vertical through-aperture (L), and
- at least one portion of said at least one free section (45) of inner tube (4) that is interposed between said proximal edges (51) of said outer tubes (5), intended to be brought through the vertical through-aperture (L),
the proximal edge (51) of the outer tube (5) of one at least of the duct parts (2, 3) extending in a plane (P) perpendicular to a longitudinal axis (2', 3'),
**characterized in that** the assembly end (21, 31) of one at least of said duct parts (2, 3) includes sealing means (8) comprising a compressible material,
the sealing means (8) being arranged at said proximal edge (51) and in protrusion with respect to said plane (P),
and **in that** said sealing means (8) are arranged to be compressed to said horizontal wall (H) so as to provide fume tightness to said through-aperture (L).

2. The duct element according to claim 1, **characterized in that** the annular space (6) of one at least of the duct parts (2, 3) includes a proximal opening (61), delimited by the proximal edge (51) of the outer tube (5),
and **in that** the sealing means (8) extend at, and on either side of, said proximal opening (61).

3. The duct element according to any one of claims 1 or 2, **characterized in that** the sealing means (8) are formed by fire-retardant heat insulation means.

4. The duct element according to any one of claims 1 to 3, **characterized in that** the assembly ends (21, 31) of both duct parts (2, 3) each include said sealing means (8).

5. The duct element according to any one of claims 1 to 4, **characterized in that** the sealing means (8) include a proximal surface (81) that has the general shape of an annular strip, delimited between the associated inner (4) and outer (5) tubes.

6. The duct element according to any one of claims 1 to 5, **characterized in that** the inner tube (4) of one at least of said duct parts (2, 3) include, on the side of said assembly end (21, 31), the free section (45) that extends in protrusion with respect to said associated outer tube (5).

7. The duct element according to claim 6, **characterized in that** the inner tube (4) of both said duct parts (2, 3) include, on the side of their respective assembly ends (21, 31), said free section (45).

8. The duct element according to any one of claims 6 or 7, **characterized in that**, on the side of their respective assembly ends (21, 31), the diameter of an inner surface (43) of the inner tube (4) of a first duct part (3) corresponds, to within a clearance, to the diameter of an outer surface (44) of the inner tube (4) of a second duct part (2), to allow the fitting of the associated assembly ends (21, 31) into each other.

9. The duct element according to any one of claims 1 to 8, **characterized in that** the proximal edge (51) of the outer tube (5) of one at least of the duct parts (2, 3) includes fastening means (58) to the horizontal wall (H).

10. The duct element according to claim 9, **characterized in that** the fastening means (58) comprise a flange (58) connected to the proximal edge (51) of the outer tube (5), provided with a plurality of orifices (581) distributed over the perimeter thereof for receiving fasteners (F).

11. A heating installation, comprising:
- a heating appliance producing combustion fumes, and
- a fume duct equipped with at least one duct element (1) according to any one of claims 1 to 10.

12. A building structure comprising a horizontal wall (H) through which is formed a vertical through-aperture (L), **characterized in that** said building structure is equipped with a heating installation according to claim 11, whose duct element (1) according to claims 1 to 10 is brought at said vertical through-aperture (L), on either side of the horizontal wall (H), so that:
- said at least one free section (45) of inner tube (4) is brought through the vertical through-aperture (L), and
- said proximal edges (51) of the outer tubes (5) extend on either side, and over the perimeter, of the vertical through-aperture (L),
and **in that** the diameter of said vertical through-aperture (L) is comprised between the diameter of said at least one free section (45) of inner tube (4) and the diameter of said outer tubes (5),
wherein said sealing means (8) are in a state in which they are compressed against said horizontal wall (H).

13. The building structure according to claim 12, in combination with claim 5, **characterized in that** the proximal surface (81) of the sealing means (8) bears on the perimeter of the vertical through-aperture (L), on the side of an upper surface (H1) and of a lower surface (H2), respectively, of the horizontal wall (H), hence causing the displacement thereof and the compression of the sealing means (8).
